# EUROPEAN PATENT APPLICATION

(11) **EP 1 256 600 A1**
(43) Date of publication of application: **13.11.2002**
(21) Application number: 01201733.1
(22) Date of filing: 10.05.2001
(51) Int. Cl.: C08K 5/50, C08K 5/5398, C08K 5/5415, C08K 5/54, C08K 5/42, C08K 5/00

(54) **Thermoplastic composition comprising an antistatic activity enhancer and use of such an enhancer**

(71) Applicant: GENERAL ELECTRIC COMPANY, Schenectady, NY 12345 (US)
(72) Inventor: Scholten, Alex Bernard, 4611 LW Bergen op Zoom (NL)
(74) Representative: Volmer, Johannes Cornelis

(57) **Abstract**

A thermoplastic composition comprises (A) 100 parts by weight of a thermoplastic polymer, such as polycarbonate or a blend thereof, (B) 0.0001-10 parts by weight of a sulfonic acid phosphonium salt as an antistatic agent, and (C) 0.01-1 parts by weight of a silicone oil based compound as an antistatic activity enhancer. Such a composition shows a good antistatic behaviour without compromizing optical properties. Optionally an antistatic synergist may be present.

## Description

### BACKGROUND OF THE INVENTION

The present invention relates to a thermoplastic composition, comprising a thermoplastic polymer and an antistatic agent.

Polycarbonate based compositions (hereinafter polycarbonate will also be referred to as "PC") are known for their excellent properties in terms of transparency, heat resistance and mechanical strength. Therefore they are used in a broad variety of applications, for example lighting applications such as automotive head lamp lenses, covers and lenses for various illuminating devices, transparent films and sheets, optical disks and optical disk cartridges, various parts used in office equipment and household appliances, and case materials used for storage and transportation, etc.

In particular in applications where optical properties or aesthetic appearance of plastic parts are significant, the electrostatic nature of PC surfaces in general can cause problems. Accumulation of electrical charges on the polymeric parts causes dust and dirt from the environment to be attracted to the polymeric surfaces. Because PC is an electrical insulator material, irregular surface charge distributions on the surface occur. As a result visually disturbing dust or dirt attraction patterns e.g. fernlike marks arise, especially after prolonged exposure or after electrostatic charging in the final application.

Antistatic additives used in such compositions enable dissipation of electrical surface charges. Most commonly they attract water to the polymeric surface, thereby forming a conductive surface layer. For optical quality PC applications esters of branched fatty acids and polyhydroxylic compounds and phosphonium sulfonates have been suggested as antistatic additives. Especially the alkylphenylsulfonate phosphonium salts as disclosed in US-A-4,943,380 have been appreciated for their antistatic effectiveness. Furthermore US-A-6,090,907 has disclosed that in PC compositions having a content of less than 0.1 wt.% of a sulfonic acid phosphonium salt the formation of socalled amorphous contamination patterns on freshly molded polymer parts is suppressed.

A drawback of the alkylphenylsulfonate phosphonium salts as antistatic agents is that the required concentration levels for satisfactory antistatic behaviour and persistence are high. In practice they are higher than one would like, because thereby other desirable properties are adversely affected. Furthermore it has been found following the teaching of US-A-6,090,907 that for long term antistatic effect and good performance in the final application of a polymer part, the use of higher levels than disclosed is mandatory.

Thus there is still a need for improving the effectiveness of antistatic agents in thermoplastic compositions. In particular there is a need for a thermoplastic PC based composition having a low content of antistatic agent, in which the optical properties are maintained.

### SUMMARY OF THE INVENTION

The present invention provides a thermoplastic composition, comprising (A) 100 parts by weight of a thermoplastic polymer, (B) 0.0001-10 parts by weight of a sulfonic acid phosphonium salt as an antistatic agent, and (C) 0.01-1 parts by weight of a silicone oil based compound as an antistatic activity enhancer. In general the present invention applies to high performance engineering plastics to which sulphonic acid salts can be added as antistatic agent in combination with polymeric silicone as enhancer of antistatic activity.

It has been found that in cases where mold release agents are added to thermoplastic polymeric formulations such as PC based plastics, the type of mold release agent determines the final antistatic level of the molded article to a large extent. Instead of the common alkylesters of polyols, which are most frequently used as mold release agents in polycarbonate compositions, polymeric silicone compounds are used in the composition according to the invention. Upon use of these compounds in combination with a sulfonic acid phosphonium salt as antistatic agent the static decay values of the surfaces of molded parts are lowered significiantly at equal concentrations of the antistatic additives. Moreover, the persistence of the antistatic effect is improved. Transparency of the present compositions is comparable to that of prior art materials.

Here it should be noted that US-A-6,090,907 mentions among others silicone type compounds as an example of mold release agents. However, in the composition according to the invention the silicone oil based compound has a different function. It may act as a mold release (co-)agent, but most importantly it is an antistatic activity enhancer for the main antistatic additive.

The present invention provides also the use of a silicone oil based compound as antistatic activity enhancer in thermoplastic polymer compositions comprising an antistatic agent.

### DETAILED DESCRIPTION OF THE INVENTION

In the present invention the thermoplastic polymer is preferably a polycarbonate or a blend thereof.

Aromatic polycarbonates manufactured by the well known phosgene method or melt method, for example, see Japanese Unexamined Patent Application Disclosure No. Sho 63-215763 and Japanese Unexamined Patent Application Disclosure No. Hei 2-124934, can be used as the abovementioned polycarbonate resin (A). Polycarbonate resins consist of a carbonate component and a diphenol component. Examples of precursor substances which can be used to introduce the carbonate component include phosgene and diphenyl carbonate, etc. Furthermore, examples of suitable diphenols include 2,2-bis(4-hydroxyphenyl)propane (so-called "bisphenol A" or "BPA"); 2,2-bis(3,5-dibromo-4-hydroxyphenyl)propane; 2,2-bis(3,5-dimethyl-4-hydroxyphenyl)propane; 1,1-bis(4-hydroxyphenyl)cyclohexane; 1,1-bis(3,5-dimethyl-4-hydroxyphenyl)cyclohexane; 1,1-bis(4-hydroxyphenyl)decane; 1,4-bis(4-hydroxyphenyl)propane; 1,1-bis(4-hydroxyphenyl)cyclododecane; 1,1-bis(3,5-dimethyl-4-hydroxyphenyl)cyclododecane; 4,4-dihydroxydiphenyl ether; 4,4-thiodiphenol; 4,4-dihydroxy-3,3-dichlorodiphenyl ether; and 4,4-dihydroxy-2,5-dihydroxydiphenyl ether, etc. These compounds may be used alone or in combination. In addition, compounds with three or more phenolic hydroxy groups may be used.

Alternatively, component (A) may be an aromatic copolyester carbonate. In addition to carbonate units originating in universally known aromatic diols, such compounds also have ester units originating in aromatic diols and aliphatic dicarboxylic acids with 6 to 18 carbon atoms. The phosgene method or melt method, which are universally known as methods of manufacturing aromatic polycarbonates, may be used to manufacture such compounds. See e.g. US-A-4,238,596, US-A-4,238,597 and US-A-3,169,121.

Blends of PC with other compatible polymers may also be used in the present compositions. Examples of such polymers include polybutylene terephtalate, butadiene styrene rubbers like MBS rubber. The ratio of the other compatible polymers to PC may be up to 50:50 or even higher.

The sulfonic acid phosphonium salt (B) used in the present invention as an antistatic agent is expressed, for example, by the following formula

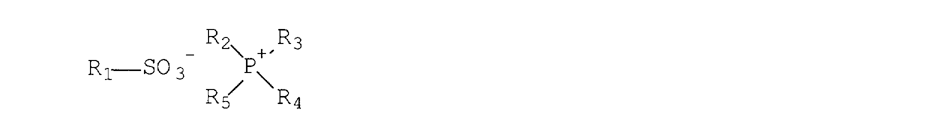

In the above formula, R¹ indicates an alkyl group with 1 to 40 carbon atoms or an aryl group with 6 to 40 carbon atoms, and R², R³, R⁴ and R⁵ each independently indicate a group selected from a set consisting of hydrogen atoms, alkyl groups with 1 to 10 carbon atoms and aryl groups with 1 to 10 carbon atoms. Here, the term alkyl group includes linear, branched and cyclic alkyl groups. Furthermore, the term aryl group includes alkylaryl and arylalkyl groups. Furthermore, such alkyl groups and aryl groups may be substituted by optional groups. See US-A-6,090,907.

Examples of alkyl groups which may occur as R¹ include dodecyl groups, decyl groups, butyl groups and ethyl groups, etc. Examples of aryl groups include dodecylphenyl groups, phenyl groups, benzyl groups, phenethyl groups, tolyl groups and xylyl groups, etc. R¹ is preferably an aryl group.

Examples of alkyl groups which may occur as R² through R⁵ include methyl, ethyl, propyl and butyl groups, etc. Examples of aryl groups include phenyl groups, benzyl groups, phenethyl groups, tolyl groups and xylyl groups, etc.

Examples of desirable sulfonic acid phosphonium salts include tetraalkylphosphonium salts of dodecylsulfonic acid, and tetraalkylphosphonium salts of dodecylbenzenesulfonic acid, etc.

Substituted phosphonium salts of the medium and short chain sulfonic acids as disclosed in US-A-6,194,497 are further examples of component (B). These substituted phosphonium salts have the general formula: 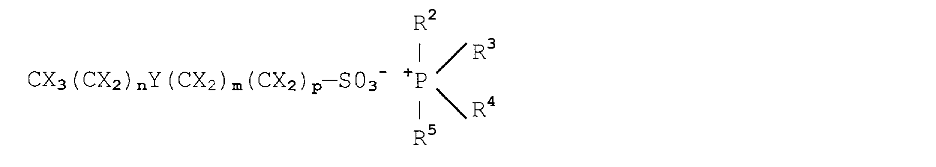 wherein X is independently selected from halogen or hydrogen provided that at least one (1) X is halogen; n, m and p are integers from 0 to 12; and Y is zero or a cyclic structure containing carbon or an atomic group containing nitrogen, oxygen, sulfur, selenium, phosphorus, arsenic, and the like; R₁, R₂, and R₃ are the same, each having an aliphatic hydrocarbon radical with 1-8 carbon atoms or an aromatic hydrocarbon radical of 6-12 carbon atoms and R₄ is a hydrocarbon radical with 1-18 carbon atoms. The halogens may be independently selected from bromine, chlorine, fluorine and iodine. Preferably, the halogen is fluorine.

A preferred substituted phosphonium sulfonate is fluorinated phosphonium sulfonate and is composed of a fluorocarbon containing an organic sulfonate anion and an organic phosphonium cation. Examples of such organic sulfonate anions include perfluoro methane sulfonate, perfluoro butane sulfonate, perfluoro hexane sulfonate, perfluoro heptane sulfonate and perfluoro octane sulfonate. Examples of the aforementioned phosphonium cation include aliphatic phosphonium such as tetramethyl phosphonium, tetraethyl phosphonium, tetrabutyl phosphonium, triethylmethyl phosphonium, tributylmethyl phosphonium, tributylethyl phosphonium, trioctylmethyl phosphonium, trimethylbutyl phosphonium trimethyloctyl phosphonium, trimethyllauryl phosphonium, trimethylstearyl phosphonium, triethyloctyl phosphonium and aromatic phosphoniums such as tetraphenyl phosphonium, triphenylmethyl phosphonium, triphenylbenzyl phosphonium, tributylbenzyl phosphonium.

Alkylphenylsulfonate phosphonium salt advantageously at a level of 0.001-5 parts by weight is a preferred component (B) .

The present composition may also comprise up to 0.1 parts by weight of a sulfonate alkali metal salt (D). Such a compound acts as a synergist for the antistatic agent (B).

The sulfonate anion of the sulfonate alkali metal salts which may be used as component (D) in the present composition can be exemplified by those sulfonates having an alkyl group with 1-36 carbon atoms, by those sulfonates having an alkenyl group with 2-24 carbon atoms, phenylsulfonate, which may be substituted by an alkyl group with 1-18 carbon atoms, diphenylsulfonate, naphtylsulfonate, which may be substituted by an alkylgroup having 1-18 carbon atoms. See e.g. EP-A1-1000969. The potassium salt is preferred.

As silicone oil based compound any organic polydisiloxane compatible with the thermoplastic resin to be molded can be used. Examples are those compounds disclosed in US-A-4,390,651 as mold release agents. These mold release agents are phenyl-containing organopolysiloxanes having the formula 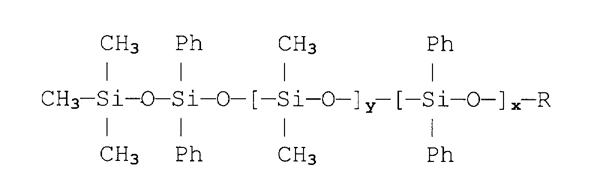 wherein Ph is phenyl, R is hydrogen, trimethylsilyl or mixtures thereof and wherein x and y have a value sufficient to provide a phenyl content of from about 7 wt.% to about 80 wt.%. Preferred examples are methylphenylsiloxane and dimethylsiloxane containing copolysiloxanes. E.g. for polycarbonate a random copolysiloxane of dimethylsiloxane and methylphenylsiloxane in a 2:1 ratio may be used.

The thermoplastic composition according to the invention may also comprise various optional components, including UV absorbing agents, phosphorous type stabilizers as oxidation inhibitors, hindered phenol type oxidation inhibitors, epoxy type stabilizers and sulphur type stabilizers, etc.

Any ultraviolet absorbing agent customarily used in PC resin compositions may be used as the above mentioned ultraviolet absorbing agent. For example, benzotriazole type ultraviolet absorbing agents, benzophenone type ultraviolet absorbing agents or salicylate type ultraviolet absorbing agents, etc., may be used. Examples of benzotriazole type ultraviolet absorbing agents include 2-(2'-hydroxy-5'-methylphenyl)benzotriazole, 2-(2'-hydroxy-5'-t-butylphenyl)benzotriazole, 2- (2'-hydroxy-5'-t-octylphenyl)benzotriazole, 2- (2'-hydroxy-3',5'-di-t-butylphenyl)benzotriazole, 2-(2'-hydroxy-3',5'-di-amylbutylphenyl)benzotriazole, 2-(2'-hydroxy-3'-dodecyl-5'-methylphenyl)benzotriazole, 2-(2'-hydroxy-3',5'-dicumylphenyl)benzotriazole and 2,2'-methylenebis[4-(1,1,3,3-tetramethylbutyl)-6-(2H-benzotriazol-2-yl)phenol], etc. For example, a benzotriazole type ultraviolet absorbing agent is marketed by American Cyanamid Co. as UV5411. Furthermore, a benzophenone type ultraviolet absorbing agent is marketed by American Cyanamid Co. as UV531. Examples of salicylate type ultraviolet absorbing agents include phenyl salicylate, p-t-butylphenyl salicylate and p-octylphenyl salicylate, etc.

Examples of phosphorous type stabilizers comprise triphenyl phosphite, diphenylnonyl phosphite, tris(2,4-di-t-butylphenyl) phosphite, trisnonylphenyl phosphite, diphenylisooctyl phosphite, 2,2'-methylenebis (4,6-di-t-butylphenyl)octyl phosphite, diphenylisodecyl phosphite, diphenylmono(tridecyl) phosphite, 2,2'-ethylidenebis(4,6-di-t-butylphenol) fluorophosphite, phenyldiisodecyl phosphite, phenyldi(tridecyl) phosphite, tris(2-ethylhexyl) phosphite, tris(isodecyl) phosphite, tris(tridecyl) phosphite, dibutyl hydrogenphosphite, trilauryl trithiophosphite, tetrakis(2,4-di-t-butylphenyl)4,4'-biphenylene diphosphite, 4,4'-isopropylidenediphenol alkyl (C₁₂ -C₁₅) phosphites, 4,4'-butylidenebis(3-methyl-6-t-butylphenyl)ditridecyl phosphite, bis(2,4-di-t-butylphenyl) pentaerythritol diphosphite,
bis(2,6-di-t-butyl4-methylphenyl) pentaerythritol diphosphite, bis(nonylphenyl)pentaerythritol diphosphite, distearyl-pentaerythritol diphosphite, phenyl-bisphenol A pentaerythritol diphosphite, tetraphenyldipropylene glycol diphosphite, 1,1,3-tris (2-methyl4-di-tridecylphosphite-5-t-butylphenyl)butane and 3,4,5,6-dibenzo-1,2-oxaphosphan-2-oxide, etc. Available commercial products include Adekastab PEP-36, PEP-24, PEP-4C and PEP-8 (all trademarks, manufactured by Asahi Denka Kogyo K.K.), Irgafos 168 (trademark, manufactured by Ciba Geigy Co.), Sandstab P-EPQ (trademark, manufactured by Sandoz Co.), Chelex L (trademark, manufactured by Sakai Kagaku Kogyo K.K.), 3P2S (trademark, manufactured by Ihara Chemical Kogyo K.K.), Mark 329K and Mark P (both trademarks, manufactured by Asahi Denka Kogyo K.K.) and Weston 618 (trademark, manufactured by Sanko Kagaku K.K.), etc.

Examples of hindered phenol type oxidation inhibitors include n-octadecyl-3-(3',5'-di-t-butyl4-hydroxyphenyl) propionate, 2,6-di-t-butyl4-hydroxymethylphenol, 2,2'-methylenebis (4-methyl-6-t-butylphenol) and pentaerythritol-tetrakis[3-(3,5-di-t-butyl4-hydroxyphenyl)propionate, etc.

Examples of epoxy type stabilizers include epoxidized soybean oil, epoxidized linseed oil, phenylglycidyl ether, allylglycidyl ether and 3,4-epoxycyclohexylmethyl-3',4'-epoxycyclohexane carboxylate, etc.

Other customary additives may be added to all of the resin compositions of the present invention at the time of mixing or molding of the resin in amounts as necessary which do not have any deleterious effect on physical properties. For example, coloring agents (pigments or dyes), reinforcing agents (glass fibers, carbon fibers, etc.), fillers (carbon black, silica, titanium oxide, etc.), heat-resistant agents, oxidation inhibitors, weather-proofing agents, lubricants, mold release agents, plasticizer, flame retarding agents and fluidity enhancing agents, etc., may be added. Furthermore, dyes may be added in order to ameliorate yellowness in the blue direction.

As to the method of preparing the present compositions conventional techniques using standard equipment can be used without any particular limitation, e.g. melt mixing optionally using small amounts of solvents. The components of the composition can be mixed in any order. Extruders, Banburry mixers, rollers and kneaders etc. operated batchwise or continuously are examples of suitable apparatus.

A preferred application of the thermoplastic composition according to the invention is in lenses for automotive head lights.

### EXAMPLES

Hereinafter the invention will be illustrated in more detail by the following Working Examples and Comparitive Examples.

The PC used - component (A) - is manufactured by Nippon GE Plastics K.K. under the trademark LEXAN. Component (B) is dodecylbenzene sulfonic acid tetrabutylphosphonium salt, which is available from Takemoto Yushi K.K. under the tradename EPA 202. As component (D) potassium diphenylsulfonsulfonate, tradename KSS, available from Seal Sands Chemicals is used. The silicone antistatic activity enhancer (C) is a phenylmethyl-dimethylsiloxane, TSF 437, manufacured by Tosil.

If present, the optional components are as follows: Ultraviolet stabilizer 2-(2-hydroxy-3,5-dicumyl)benzotriazole (tradename Tinuvin 234 from Ciba Geigy); heat stabilizer tris(2,4-di-tert-butylphenyl)phosphite (tradename Irgafos 168 from Ciba Geigy), triphenylphosphine (tradename TPP from Bayer), tetrakis(2,4-di-tert-butylphenyl-4,4'-biphenylene)diphosphonite (tradename PEPQ from CIBA); oxidation inhibitor of the hindered phenyl type n-octadecyl-3,5-di-tert-butyl-4-hydrozyhydrocinnamate (tradename Irganox 1076 from Ciba Geigy); epoxy stabilizer 3,4-epoxycyclohexylmethyl-3',4'-epoxycyclohexane carboxylate (tradename Epoxy Resin ERL 4221 from Union Carbide); mold release agent pentaerythritoltetrastearate (tradename PETS G from Faci), dodecylbenzenesulfonate potassium salt (tradename EPA 219 from Takemoto Yushi K.K.).

In all the examples the respective components were mixed in the proportions (wt.%) as listed in the Tables below. Then pellets were extruded using a twin screw extruder set at 285°C, 300 rpm and 25 kg/hr. Pellets thus obtained were injection molded at a molding temperature of 295°C and a mold temperature of 90°C. Abusive molding at 320°C and a residence time of 15 minutes was performed in some examples.

The articles thus obtained were subjected to various tests. Static decay half time values were measured on flat-plate injection-molded samples of 70x60x2.55 mm using a Honestometer type S5109 (Shishido Electrostatic Ltd.). The charging potential was -10 kV. Results are represented as the static decay half time value (t_{1/2} in sec.), i.e. the time in which half of the acquired charge is dissipated. Futhermore, several optical properties such as light transmittance, yellowness index and haze were measured according to ASTM D1003 for the sample plates.

**Table 1.**

| Comparitive Example | 1 | 2 | | | | 3 | |
|---|---|---|---|---|---|---|---|
| Working Example | | | 1 | 2 | 3 | | 4 |
| Polycarbonate | 97.8 | 97.8 | 97.8 | 97.8 | 97.8 | 97.1 | 97.1 |
| Ultraviolet stabilizer | 0.27 | 0.27 | 0.27 | 0.27 | 0.27 | 0.27 | 0.27 |
| Heat stabilizer | 0.08 | 0.08 | 0.08 | 0.08 | 0.08 | 0.08 | 0.08 |
| Ocidation inhibitor | 0.02 | 0.02 | 0.02 | 0.02 | 0.02 | 0.02 | 0.02 |
| Epoxy Stabilizer | 0.02 | 0.02 | 0.02 | 0.02 | 0.02 | 0.02 | 0.02 |
| Sulfonic acid phosphonium salt | 1.43 | 1.43 | 1.43 | 1.43 | 1.43 | 2.2 | 2.2 |
| Sulfonic acid potassium salt | 0.08 | 0.08 | 0.08 | 0.08 | 0.08 | 0 | 0 |
| Sulfonsulfonic acid potassium salt | 0 | 0 | 0 | 0 | 0 | 0.06 | 0.06 |
| PETS | 0.27 | 0.27 | 0 | 0 | 0 | 0.27 | 0 |
| Silicone antistatic activity enhancer | 0 | 0 | 0.27 | 0.30 | 0.30 | 0 | 0.27 |
| | | | | | | | |
| Initial static decay half value time [sec] | 300 | 200 | 126 | 51 | 13 | 123 | 26 |
| Static decay half value time [sec] after abusive molding | | | | | | 200 | 29 |
| Transmittance [%] | 90.2 | 91.2 | 89.9 | 90.0 | 89.9 | 89.8 | 89.7 |
| Yellowness index | 2.91 | 2.65 | 2.75 | 2.66 | 3.04 | 2.00 | 1.90 |
| Haze [%] | 0.99 | 0.55 | 0.85 | 0.76 | 0.72 | 0.50 | 0.30 |

From the above Table it appears that in the compositions according to the invention which do comprise an antistatic activity enhancer based on silicone oil the electrical charge is dissipated rather quickly without significantly affecting the optical properties.

The compositions according to the invention also show a prolonged antistatic behavior upon heat aging at 120°C under ambient atmosphere. This is reflected in table 2, based on heat aging data of the compositions according to table 1.

**Table 2.**

| Time at 120°C [hrs] | Average t_{1/2} of Comparitive Examples 1-3 [sec] | Average t_{1/2} of Working Examples 1-3 [sec] | t_{1/2} improvement |
|---|---|---|---|
| 0 | 187 | 44 | -142 |
| 48 | 138 | 101 | -36 |
| 96 | 300 | 217 | -83 |
| 144 | 176 | 124 | -52 |
| 192 | 300 | 267 | -33 |
| 240 | 190 | 178 | -12 |
| 792 | 300 | 300 | 0 |

Also after abusive molding the antistatic effect of the composition according to the invention is still better than that of the composition containing PETS. In other words the present composition is more suitable for different polymer processing conditions.

**Table 3.**

| Static decay half value time [sec] | Comparitive Example 3 | Working Example 4 |
|---|---|---|
| t_{1/2} | 200 | 28.5 |
| t_{1/2} increment vs. standard molding | 77 | 3.0 |

The enhanced antistatic effect is also attained in blends comprising PC, as shown in Table 4.

**Table 4.**

| Working Example | 5 | | 6 | |
|---|---|---|---|---|
| Comparitive Example | | 4 | | 5 |
| | | | | |
| Polycarbonate | 45.0 | 45.0 | 45.5 | 45.5 |
| Polybutyleneterephtalate | 42.4 | 42.4 | 42.2 | 42.2 |
| MBS rubber | 11 | 11 | 11 | 11 |
| Stabilizer | 0.05 | 0.05 | 0.05 | 0.05 |
| Sulfonic acid phosphonium salt | 0.8 | 0.8 | 0.4 | 0.4 |
| Sulfonsulfonic acid potassium salt | 0.06 | 0.06 | | |
| PETS | | 0.3 | | 0.3 |
| Silicone antistatic activity enhancer | 0.3 | | 0.3 | |
| | | | | |
| Initial static decay half value time [sec] | 124 | >300 | 30 | 190 |

## Claims

1. A thermoplastic composition, comprising (A) 100 parts by weight of a thermoplastic polymer, (B) 0.0001-10 parts by weight of a sulfonic acid phosphonium salt as an antistatic agent, and (C) 0.01-1 parts by weight of a silicone oil based compound as an antistatic activity enhancer.

2. A thermoplastic composition according to claim 1,
wherein the sulfonic acid phosphonium salt (B) is 0.001-5 wt.% alkylphenylsulfonate phosphonium salt.

3. A thermoplastic composition according to claim 1 or 2,
wherein the composition also comprises (D) 0-0.1 parts by weight of a sulfonate alkali metal salt.

4. A thermoplastic composition according to claim 3,
wherein the sulfonate alkali metal salt is a sulfonate potassium salt.

5. A thermoplastic composition according to any one of claims 1-4, wherein the thermoplastic polymer (A) is polycarbonate or a blend thereof.

6. Use of a silicone oil based compound as an antistatic activity enhancer in the preparation of a thermoplastic polymer composition comprising an antistatic agent.

7. Use according to claim 6, wherein the antistatic agent is a sulfonic acid phosphonium salt.

8. Use according to claim 6 or 7, wherein the polymer composition comprises polycarbonate or a blend thereof.

9. Lighting application, comprising a thermoplastic composition according to any one of claim 1-5.
